(19)

Europäisches Patentamt

European Patent Office

Office européen des brevets

(11) **EP 4 659 887 A1**

(12) **EUROPEAN PATENT APPLICATION**

(43) Date of publication:
**10.12.2025 Bulletin 2025/50**

(21) Application number: **25177985.6**

(22) Date of filing: **21.05.2025**

(51) International Patent Classification (IPC):
*B23K 9/095* $^{(2006.01)}$  *B23K 9/12* $^{(2006.01)}$

(52) Cooperative Patent Classification (CPC):
**B23K 9/0956; B23K 9/0953; B23K 9/124**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.05.2024 US 202463653606 P**
**30.04.2025 US 202519195094**

(71) Applicant: **Illinois Tool Works Inc.**
**Glenview IL 60025 (US)**

(72) Inventors:
• **MEHN, Peter D.**
**Glenview, 60025 (US)**
• **DICKINSON, Darin**
**Glenview, 60025 (US)**

(74) Representative: **HGF**
**HGF Limited**
**4th Floor, 1 City Square**
**Leeds LS1 2AL (GB)**

(54) **SYSTEMS AND METHODS FOR ALTERNATE CABLE LENGTH COMPENSATION (CLC) INITIAL ESTIMATE MECHANISM**

(57)     An example welding-type system includes a welding-type power source configured to provide power in the welding-type system, and a welding-type wire feeder configured to feed electrode wire during welding-type operations. The welding-type power source and the welding-type wire feeder form a feeder power circuit that may further include one or more welding-type cables. The welding-type power source is configured to obtain initial event data relating to an initial attachment event, and generate, based on the initial event data, an initial estimate for Cable Length Compensation (CLC) in a weld circuit that includes the welding-type power source and the welding-type wire feeder. The initial attachment event may include closing the feeder power circuit in a powered-up state or powering on the welding-type system when the feeder power circuit is already closed. The initial event data includes duration and one or both of voltage and current of the initial attachment event.

Fig. 1

EP 4 659 887 A1

# EP 4 659 887 A1

## Description

### CLAIM OF PRIORITY

This patent application claims priority to and claims benefit from United States Provisional Patent Application Serial No. 63/653,606, filed May 30, 2025. The above identified application is hereby incorporated herein by reference in its entirety.

### BACKGROUND

Welding has become increasingly ubiquitous. Welding can be performed in an automated manner or in a manual manner (e.g., being performed by a human). Various equipment or components may be used during welding operations. For example, power sources may be used to provide power to various devices or components during welding operations.

In some instances, conventional welding solutions may have some limitations and/or disadvantages. For example, use of power sources in conventional welding set up may have limitations and/or disadvantages, such as with respect to accounting for variations in the welding setups.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for alternate cable length compensation (CLC) initial estimate mechanism, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup that may be used for welding-type operations.

Fig. 2 shows an example welding-type system that may be configured to incorporate or use cable length compensation (CLC) initial estimate mechanism based on the present disclosure.

Fig. 3 shows an equivalent circuit diagram of an example welding-type system.

Fig. 4 shows an equivalent circuit diagram with connection switch of an example welding-type system.

Fig. 5 shows a graph illustrating voltage and current in a welding-type system with short cables during a clamp connection.

Fig. 6 shows a graph illustrating voltage and current in a welding-type system with long cables during a clamp connection.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

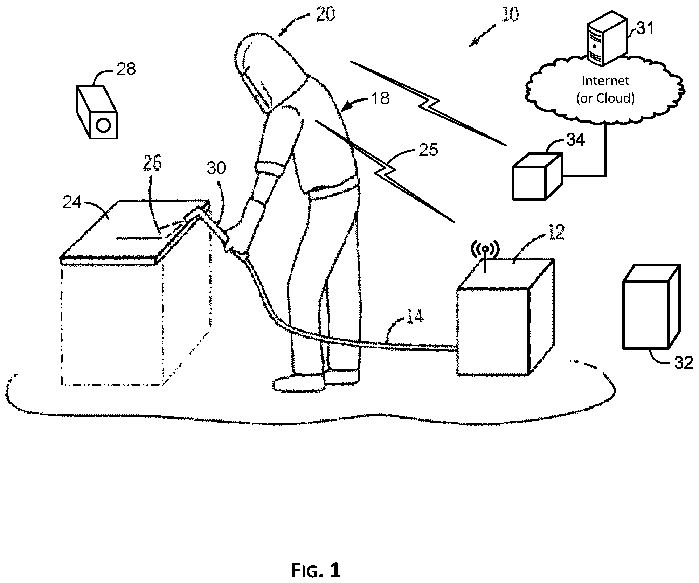

Fig. 1 shows an example welding-type setup that may be used for welding-type operations. Referring to Fig. 1, there is shown an example welding-type setup 10 in which an operator (user) 18 is wearing headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations.

For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some example implementations, welding-type systems or setups, such as the welding-type setup 10, may be configured for collecting and reporting data relating to welding-type operations and/or to functions or components utilized during welding-type operations. For example, data from welding processes, power sources, welding-related accessories etc. in a weld setup may be collected. In this regard, the collected data may comprise, for example, current, voltage, wire feed speed, weld states, and numerous other power source parameters and settings.

The collected data may then be sent to remote entities (e.g., a remote server 31, which may be a manufacturer-controlled, Internet-based cloud server) and/or to local systems or devices (e.g., local PC, a tablet, a smartphone, etc.). The collected data may be utilized in enhancing welding-related systems and/or operations. For example, manufacturers may utilize the collected data to identify issues (and correct them) and/or devise modifications or improvements in the various components. Further, users may be able to generate reports on collected data to measure, document, and improve their processes.

Improving or enhancing operation of the various components of welding-type setups, such as the welding-type setup 10 of Fig. 1, is desirable. Such improvements or enhancements may be achieved by improving or enhancing particular components of welding-types setups and/or parameters associated therewith. For example, in some instances enhancing operation of welding-type setup may entail applying setting or adjusting certain welding-related parameters that affect performance and/or quality of welding operations. One such parameter is cable length compensation (CLC), which is a voltage adjustment applied at a power source used in the welding-type setup. The cable length compensation (CLC) is used to compensate for voltage drops in the connection(s) between the power source and a welding torch (gun) used in the welding-type setup for applying welds. The connection(s) may comprise, e.g., welding-type cables used in connecting the torch (gun) to the power sources as well as other components that may be traversed. Such voltage drops may not be constant, however, and may vary as these voltage drops may be affected or caused by various factors, which include, in addition to the distance between the power source and the welding torch (gun), other factors relating to, e.g., characteristics of the connecting cables and/or other components in the welding-type setup. Determining cable length compensation (CLC) may need to account for at least some of these factors.

Optimizing or enhancing cable length compensation (CLC) determination may result in corresponding enhancement to overall performance in the welding-type setups. Accordingly, solutions based on the present disclosure may provide enhanced cable length compensation (CLC) determination. In this regard, typically cable length compensation (CLC) determination may have two aspects: 1) an initial estimate (e.g., based on cable resistance estimate prior to first weld after powering on the power source), and 2) active adjustment (e.g., based on cable resistance estimates updates while welding).

In various implementations based on the present disclosure, initial estimate of CLC may be done in enhanced manner-that is, the initial estimate may be done in different and enhanced manner compared to conventional solutions, whereas the second aspect (active adjustment) may be unchanged-that is, done in similar manner as in any existing solutions, but utilizing initial estimates generated in accordance with the present disclosure. Example implementations based on the present disclosure are described in more detail below.

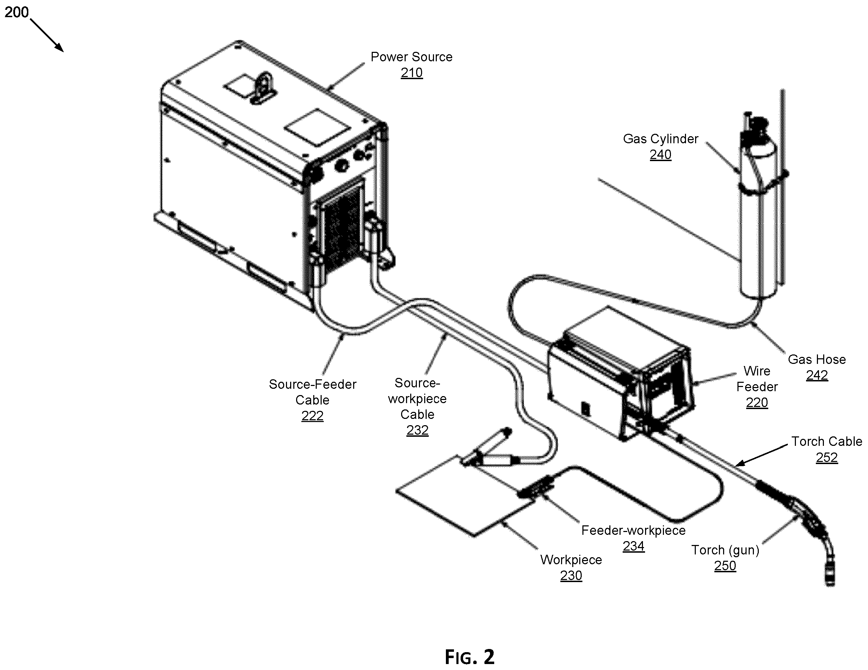

Fig. 2 shows an example welding-type system that may be configured to incorporate or use cable length compensation (CLC) initial estimate mechanism based on the present disclosure. Referring to Fig. 2, there is shown a welding-type system 200.

As illustrated in Fig. 2, the welding-type system 200 comprises a power source 210, a wire feeder 220, a welding torch (gun) 250, a gas cylinder (tank) 240, and one or more welding-type cables or connectors for providing connections between various components in the welding-type system 200 and/or connections to a workpiece 230 to which welds may be applied. The welding-type cables or connectors may comprise, for example, a source-feeder cable 222, a source-workpiece cable 232, a feeder-workpiece cable 234, and a gas connector (hose) 242.

The power source 210 may be configured to provide power to one or more other components in the welding-type system 200. The power source 210 may comprise suitable hardware and circuitry (e.g., control circuits) for facilitating the providing of power, and/or controlling or managing functions associated with the providing of power.

The wire feeder 220 may be configured to feed electrode wire during welding-type operations. The electrode wire may be fed from a wire source, such as a wire spool or the like. The wire source may be incorporated into the wire feeder 220-that is, the wire feeder 220 may incorporate component for receiving and incorporating the wire source (e.g., wire spool)-or alternatively the wire source may be separate from and external to the wire feeder 220 (e.g., a separate physical component in the setup).

The welding torch (gun) 250 may be configured to apply welds. In this regard, any suitable welding torch (gun) may be used. The gas cylinder (tank) 240 may be configured to provide gas or gases (e.g., shielding gas, etc.) during welding-type operations.

The source-feeder cable 222 may be configured for connecting the power source 210 and the wire feeder 220, to facilitate providing power (e.g., applying voltage) to the wire feeder 220. Similarly, the source-workpiece cable 232 may be configured for connecting the power source 210 and the workpiece 230, to facilitate providing power (e.g., applying voltage) to the workpiece 230. In this regard, the feeder-workpiece cable 234 may incorporate clamping mechanism to enable clamping onto the workpiece 230, such as when wanting to connect the power source 210 to the workpiece 230.

The feeder-workpiece cable 234 may be configured for connecting the wire feeder 220 and the workpiece 230, which allows for closing a circuit comprising the power source 210, the wire feeder 220, and the workpiece 230. The feeder-workpiece cable 234 may incorporate clamping mechanism to enable clamping onto the workpiece 230, such as when wanting to connect the wire feeder 220 to the workpiece 230.

The gas connector (hose) 242 may be configured for facilitating supplying of gas (or gases) from the gas cylinder (tank) 240-e.g., to welding torch (gun) 250. For example, the gas connector (hose) 242 may be used to connect the gas cylinder (tank) 240 to the wire feeder 220, which in turn supplies the gas (or gases) to the torch (gun) 250, along with the electrode wire and power, which may be received from the power source 210. In this regard, as illustrated in Fig. 2, a single torch cable 252 may be used to connect the wire feeder 220 and the welding torch (gun) 250, with the torch cable 252 being used to provide the fed electrode wire, the gas (or gases), and the power. However, the disclosure is not limited to such arrangement.

During welding operations two circuits may be formed in welding-type systems/setups (e.g., the welding-type system 200): 1) a feeder power circuit, and 2) a weld circuit. For example, in the arrangement illustrated in Fig. 2, the feeder power circuit comprises the power source 210, the source-feeder cable 222, the wire feeder 220, the feeder-workpiece cable 234, the workpiece 230, and the source-workpiece cable 232, with the circuit being closed when both the source-workpiece cable 232 and the feeder-workpiece cable 234 are connected to (e.g., clamped onto) the workpiece 230. In this regard, the feeder-workpiece cable 234 may be clamped onto the workpiece 230 when wanting to close the feeder power circuit. The weld circuit comprises the power source 210, the source-feeder cable 222, the wire feeder 220, the torch cable 252, the welding torch (gun) 250, the workpiece 230, and the source-workpiece cable 232, with the circuit being closed when the source-workpiece cable 232 is connected to (e.g., clamped onto) the workpiece 230 and the welding torch (gun) 250 is actively used in applying welds.

In accordance with the present disclosure, the welding-type system 200 may be configured to incorporate or use enhanced cable length compensation (CLC) initial estimates. In this regard, as noted one of the welding-related parameters that may be used in welding-type setups or systems, and may affect performance and/or quality of welding operations therein, is cable length compensation (CLC), and optimizing or enhancing cable length compensation (CLC) determination may result in corresponding enhancement to overall performance in the welding-type setups. In accordance with the present disclosure, initial estimates of CLC may be done or obtains in enhanced manner, with these initial estimates of CLC subsequently used in active adjustments of the CLC.

Typically, the initial estimate process may comprise the following steps: 1) applying a brief current pulse, 2) detecting peak voltage at end of current pulse, 3) sharing ending voltage data, and 4) generating an initial estimate of CLC. In particular, with respect to step 1, once a power source (e.g., the power source 210 in the welding-type system 200) detects the presence of a voltage-sensing wire feeder (e.g., the wire feeder 220 in the welding-type system 200), the power source applies a very brief (e.g., ~2 milliseconds) current pulse of known amplitude (e.g., ~50A) to the weld circuit. In this regard, with reference to Fig. 2, the power source 210 may send the current pulse through the workpiece 230, the source-workpiece cable 232, and the feeder-workpiece cable 234 (clamp) to the wire feeder 220. With respect to step 2, when the current pulse ends, the peak voltage during that pulse is captured by both the power supply and the wire feeder. This may be done by detecting, at the end of the current pulse, the falling edge of the current pulse. With respect to step 3, the wire feeder may share captured ending voltage data with the power source (e.g., over data network shared or accessed by both components). With respect to step 4, the power source may use both peak voltage samples-that sample captured directly by the power source and sample captured at and shared by the wire feeder-taken during the current pulse to estimate the welding circuit resistance.

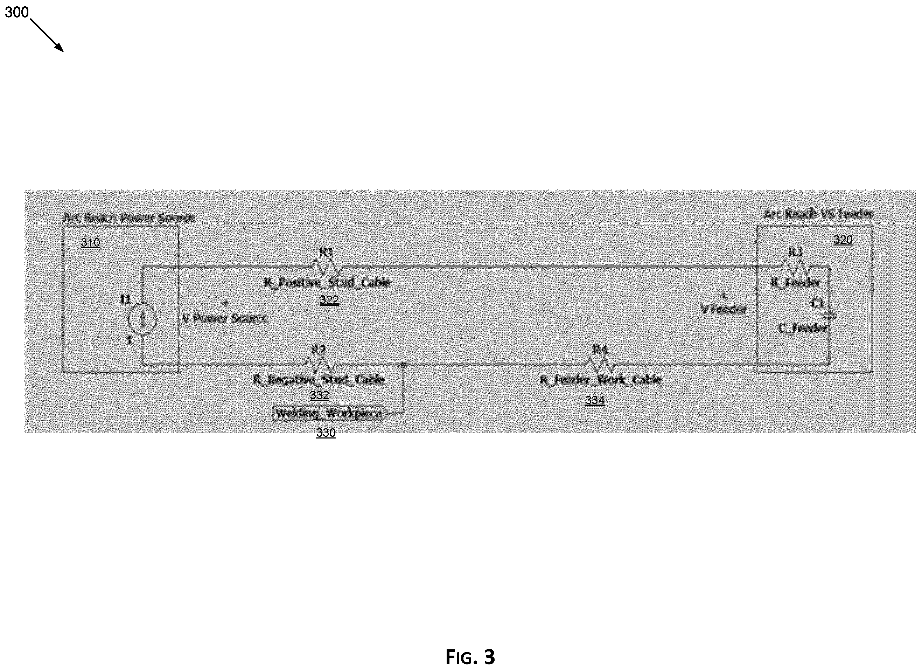

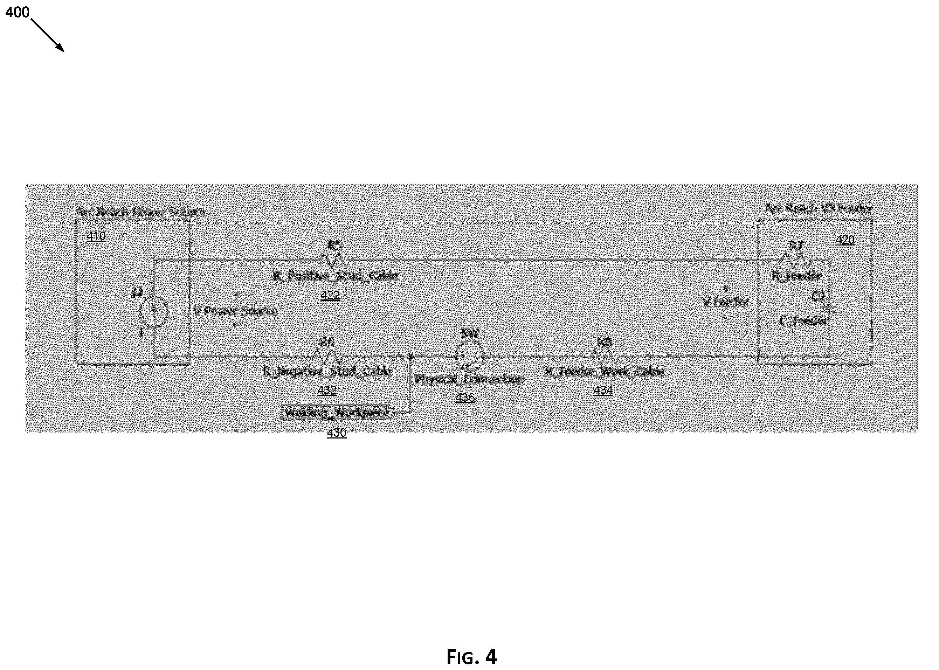

In implementations based on the present disclosure, alternative mechanisms may be used for the initial estimate determination in lieu of using the 4-step process described above. For example, in various implementations, the power source may be configured to obtain information (referred to herein as "initial event data") relating to an initial attachment event. In this regard, that initial attachment event may correspond to an actual or effective closing of the feeder power circuit. The initial attachment event may comprise, e.g., closing the feeder power circuit (e.g., connecting of the wire feeder to the workpiece, such as by clamping the feeder-workpiece cable onto the workpiece) with the welding-type system in a powered-up state, or powering on the welding-type system when the feeder power circuit is already closed (e.g., when the wire feeder is already connected to the workpiece). The power source may then generate an initial estimate of CLC for the weld circuit based on the initial event data. The two alternative approaches are described in more details with respect to Figs. 3 and 4.

In an example implementation, a voltage-sensing wire feeder (e.g., the wire feeder 220 in the welding-type system 200) may incorporate a local power switch. In use case scenarios utilizing such implementation, a user may attach the workpiece (e.g., using the clamping mechanism to clamp onto the workpiece) with the voltage-sensing wire feeder powered off. With that connection is in place, when the voltage-sensing wire feeder is switched on, the enhanced cable length compensation (CLC) initial estimation and adjustments based thereon as described herein may be applied.

Fig. 3 shows an equivalent circuit diagram of an example welding-type system. Referring to Fig. 3, there is shown a circuit 300.

The circuit 300 represents a simplified feeder power circuit in a welding-type system (e.g., similar to the welding-type system 200 of Fig. 2). In this regard, as illustrated in Fig. 3, the circuit 300 comprises a power source 310, a wire feeder 320, a welding torch (gun) 250, a workpiece 330 (to which welds may be applied), a source-feeder cable 322, a source-workpiece cable 332, and a feeder-workpiece cable 334.

Initial estimates of CLC, for a related weld circuit, may be obtained using the circuit 300. For example, the Initial estimates of CLC may be obtained using the 4-step process as described with respect to Fig. 2. In this regard, assuming that the current pulse is applied as described above (e.g., a current pulse of ~50A is used, being applied for ~2 milliseconds), respect to the estimate done in step 4, initial estimate of CLC may be determined using the formula:

$$\text{System Resistance} = (V_{power\_source} - V_{wire\_feeder})/50A$$

$$\text{Initial\_Estimate} = R\_Positive + R\_Negative - R\_Feeder\_Work\_Cable$$

where R_Positive is the resistance in the source-feeder cable 322 (shown as R1 in Fig. 3), R_Negative is the resistance in the source-workpiece cable 332 (shown as R2 in Fig. 3), and R_Feeder_Work_Cable is the resistance in the feeder-workpiece cable 334 (shown as R4 in Fig. 3).

Further, wire feeders (e.g., the wire feeder 320) may comprise capacitor(s) (or capacitor bank(s)), which is referred herein as feeder capacitor (shown as C1 in Fig. 3). During the initiate estimate determination process, when the wire feeder is connected, its capacitor bank(s) should be at 0 (zero). As such, the voltage in the feeder capacitor C1 may be actively managed (e.g., reduced), such as using data network coordination if available, prior to starting the current pulse.

The 4-step process may represent conventional approach for determining initial estimates of CLC. There may be some issues or limitations with such approach, however. For example, there may be some inductance in the system, which may not be accounted for when using 4-step process. In implementations based on the present disclosure, alternative approach (using different mechanisms) may be used for the initial estimate determination. For example, as described above, the power source may be configured to obtain initial event data relating to an initial attachment event, and may generate an initial estimate of CLC for the weld circuit based on the initial event data. The initial attachment event may correspond to actual or effective closing of the circuit. This is described in more detail with respect to Fig. 4.

Fig. 4 shows an equivalent circuit diagram with connection switch of an example welding-type system. Referring to Fig. 4, there is shown a circuit diagram 400.

The circuit 400 is substantially similar to the circuit 300 of Fig. 3, and similarly represents a simplified feeder power circuit in a welding-type system (e.g., similar to the welding-type system 200 of Fig. 2). As such, as illustrated in Fig. 4, the circuit 400 similarly comprises a power source 410, a wire feeder 420, a welding torch (gun) 250, a workpiece 430 (to which welds may be applied), a source-feeder cable 422, a source-workpiece cable 432, and a feeder-workpiece cable 434.

However, the circuit 400 additionally comprises a connection switch 436. In this regard, the connection switch 436 may be used in connecting the wire feeder 420 to the workpiece 430, to facilitate closing of the feeder power circuit in the system. The connection switch 436 may be an actual physical component configured to close the connection between the workpiece 230 and the feeder-workpiece cable 434. Alternatively, the connection switch 436 may correspond to the connecting of the feeder-workpiece cable 434 (e.g., by clamping thereon where the feeder-workpiece cable 434 incorporates clamping element) the workpiece 430.

As with the circuit 300, initial estimates of CLC, for related weld circuit(s), may be obtained using the circuit 400. However, while the circuit 400 may allow for use of the 4-step process as described herein, the alternative approach described herein may be used instead in the circuit 400 for the initial estimate determination. In this regard, the power source 410 may be configured to obtain initial event data relating to an initial attachment event (e.g., closing the physical connection between wire feeder 420 and the workpiece 430 via the connection switch 436, to closing the feeder power circuit), and to generate an initial estimate of CLC for the weld circuit based on the initial event data.

For example, when the wire feeder 420 is attached, the power source 410 may measure duration and one or both of the voltage of that initial attachment event. In this regard, wire feeders (e.g., the wire feeder 420) may comprise capacitor(s) (or capacitor bank(s)), which is referred herein as feeder capacitor (shown as C2 in Fig. 4). During the initiate estimate determination process, when the wire feeder is connected, its capacitor bank(s) should be at 0 (zero). As noted, this may be ensured by actively managing the feeder capacitor, such as using any available communication or data network coordination between the power source 410 and the wire feeder 420.

As such, the initial event data may comprise data relating to the charging of the capacitance, which may comprise the duration and one or both of voltage and current.

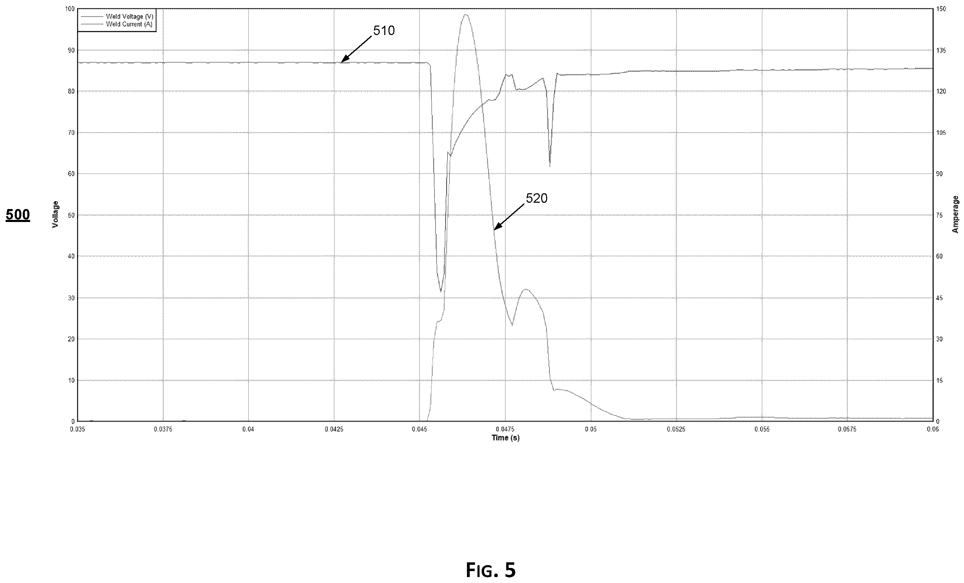

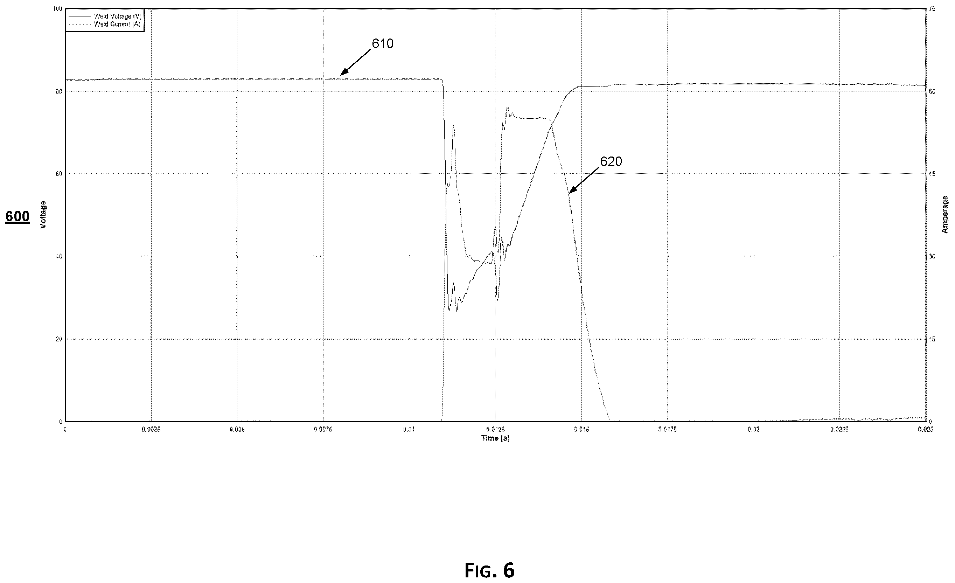

In this regard, duration is pertinent to the modeling of the charging of the capacitor(s) of the wire feeder in time, starting with particular event as initial point (t0). In particular, 'duration' refers to the amount of time starting with the event of clamping (or powering up the system if already connected) as the to and running until the capacitors are charged (to particular level). Measuring the voltage and/or current may be pertinent because these parameters may vary based on at least some of the factors that affect and/or required the CLC, such as the length of cables in the setup. This is illustrated in Figs. 5 and 6.

Since the resistance in the feeder-workpiece cable 434 (shown as R8 in Fig. 4), the resistance in wire feeder 420 (shown as R7 in Fig. 4), and the capacitance of the wire feeder 420 (shown as C2 in Fig. 4) are all known, the charging data may be used to approximate the combined resistance in the source-feeder cable 422 (shown as R5 in Fig. 4) and in the source-workpiece cable 432 (shown as R6 in Fig. 4). The power source 410 may also filter out any transients that might exist in the data-e.g., as consequence of connecting to (e.g., the clamping on) the workpiece 430.

In some instances, the power source may need some details (or information relating thereto) about the wire feeder before the initial attachment event, which may be needed in processing the initial event data (e.g., voltage and current) in order to generate the initial estimate. For example, the power source may need such information as feeder capacitance, feeder resistance, etc. The wire feeder may be configured to provide at least a portion of that information the power source. Alternatively or additionally, in some instances, at least a portion of that information may be pre-stored into the power source, and/or the user may input at least a portion of that information into the power source.

In some instances, the power source may be configured to obtain or determine required information for a plurality of different welding-type wire feeders. In this regard, the power source may be configured to, e.g., store at least a portion of required information for each of the plurality of different welding-type wire feeders. The power source may be configured to identify or select the correct required information based on identification of the wire feeder, which may be done, e.g., based on identification information provided by the wire feeder.

Fig. 5 shows a graph illustrating voltage and current in a welding-type system with short cables during a clamp connection. Shown in Fig. 5 is graph 500, comprising data representing voltage and current in a welding-type system having short cables during a clamp connection with the power source in the system operating in Constant Voltage (CV) mode.

In particular, chart 500 illustrates data capture for a clamp connection event in a system having short cable (e.g., ~20° of cable) in the secondary circuit with the power source operating in CV mode. In this regard, the graph 500 includes plots 510 and 520, with plot 510 comprising data representing voltage (y-axis) as a function of time (x-axis), and plot 520 comprising data representing current (y-axis) as a function of time (x-axis).

As illustrated chart 500 (plots 510 and 520), under such conditions (clamp connection with short cable and CV mode), the voltage raises and falls quickly-that is, a narrow and high spike in voltage-with the current pulse exhibiting corresponding sharp falls and rises.

Fig. 6 shows a graph illustrating voltage and current in a welding-type system with long cables during a clamp connection. Shown in Fig. 6 is graph 600, comprising data representing voltage and current in a welding-type system having long cables during a clamp connection with the power source in the system operating in Constant Voltage (CV) mode.

In particular, chart 600 illustrates data capture for a clamp connection event in a system having long cable (e.g., ~420° of cable) in the secondary circuit with the power source operating in CV mode. In this regard, the graph 600 includes plots 610 and 620, with plot 610 comprising data representing voltage (y-axis) as a function of time (x-axis), and plot 620 comprising data representing current (y-axis) as a function of time (x-axis).

As illustrated chart 600 (plots 610 and 620), under such conditions (clamp connection with long cable and CV mode), the voltage rising and falling more slowly compared to the short cable based setup illustrated in Fig. 5, and with the current pulse being shaped differently, as a result of the different resistance in the system.

An example welding-type system, based on the present disclosure, comprises a welding-type power source configured to provide power to one or more components of the welding-type system, and a welding-type wire feeder configured to feed electrode wire during welding-type operations. The welding-type power source and the welding-type wire feeder form a feeder power circuit, with the feeder power circuit further comprising one or more welding-type cables. The welding-type power source is configured to obtain initial event data relating to an initial attachment event, and generate, based on the initial event data, an initial estimate for Cable Length Compensation (CLC) in a weld circuit that comprises the welding-type power source and the welding-type wire feeder. The initial attachment event comprises closing the feeder power circuit in a powered-up state, or powering on the welding-type system when the feeder power circuit is already closed, and the initial event data comprises duration and one or both of voltage and current of the initial attachment event.

In an example embodiment, the feeder power circuit further comprises a workpiece.

In an example embodiment, the feeder power circuit comprises at least a first welding-type cable connecting the welding-type power source to the workpiece, a second welding-type cable connecting the welding-type power source to the welding-type wire feeder, and a third welding-type cable connecting the welding-type wire feeder to the workpiece.

In an example embodiment, the initial attachment event comprises or is based on the connecting of the welding-type wire feeder to the workpiece the using the third welding-type cable.

In an example embodiment, the third welding-type cable comprises a clamping component configured for clamping onto the workpiece.

In an example embodiment, the feeder power circuit further comprises a switching component configured for closing the feeder power circuit.

In an example embodiment, the switching component comprises a clamping component associated with one of the one or more welding-type cables, wherein the clamping component is configured for clamping onto the workpiece.

In an example embodiment, the welding-type power source is configured to generate the initial estimate based on the initial event data using operational data associated with the welding-type wire feeder.

In an example embodiment, the operational data comprises capacitance of the welding-type wire feeder.

In an example embodiment, at least a portion of the operational data is pre-stored into the welding-type power source.

In an example embodiment, at least a portion of the operational data is input into the welding-type power source by a user of the welding-type system.

In an example embodiment, the welding-type power source is configured to obtain or determine operational data for a plurality of different welding-type wire feeders.

In an example embodiment, the welding-type power source is configured to store at least a portion of operational data for each of the plurality of different welding-type wire feeders.

In an example embodiment, the welding-type power source is configured to identify or select the operational data based on identification information provided by the welding-type wire feeder.

In an example embodiment, the welding-type wire feeder comprises a capacitor component, and wherein the welding-type power source is configured to obtain the initial event data in response to flow of a charging current from the capacitor component in the feeder power circuit during the initial attachment event.

In an example embodiment, the one or more welding-type cables comprise a feeder welding-type cable connecting the welding-type wire feeder to a component or object other than the welding-type power source.

In an example embodiment, the welding-type power source is configured to generate the initial estimate based on cable-related data associated with the feeder welding-type cable.

In an example embodiment, the cable-related data comprises resistance of the feeder welding-type cable.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses.

Clause 1. A welding-type system, comprising:

a welding-type power source configured to provide power to one or more components of the welding-type system; and a welding-type wire feeder configured to feed electrode wire during welding-type operations; wherein the welding-type power source and the welding-type wire feeder form a feeder power circuit, the feeder power circuit further comprising one or more welding-type cables; and wherein the welding-type power source is configured to:

obtain initial event data relating to an initial attachment event,

wherein the initial attachment event comprises closing the feeder power circuit in a powered-up state, or powering on the welding-type system when the feeder power circuit is already closed, and wherein the initial event data comprises duration and one or both of voltage and current of the initial attachment event; and

generate, based on the initial event data, an initial estimate for Cable Length Compensation (CLC) in a weld circuit that comprises the welding-type power source and the welding-type wire feeder.

Clause 2. The welding-type system according to clause 1, wherein the feeder power circuit further comprises a workpiece.

Clause 3. The welding-type system according to clause 2, wherein the feeder power circuit comprises at least a first welding-type cable connecting the welding-type power source to the workpiece, a second welding-type cable connecting the welding-type power source to the welding-type wire feeder, and a third welding-type cable connecting the welding-type wire feeder to the workpiece.

Clause 4. The welding-type system according to clause 3, wherein the initial attachment event comprises or is based on the connecting of the welding-type wire feeder to the workpiece the using the third welding-type cable.

Clause 5. The welding-type system according to clause 3, wherein the third welding-type cable comprises a clamping component configured for clamping onto the workpiece. Clause 6. The welding-type system according to clause 2, wherein the feeder power circuit further comprises a switching component configured for closing the feeder power circuit.

Clause 7. The welding-type system according to clause 6, wherein the switching component comprises a clamping component associated with one of the one or more welding-type cables, wherein the clamping component is configured for clamping onto the workpiece.

Clause 8. The welding-type system according to clause 1, wherein the welding-type power source is configured to generate the initial estimate based on the initial event data using operational data associated with the welding-type wire feeder.

Clause 9. The welding-type system according to clause 8, wherein the operational data comprises capacitance of the welding-type wire feeder.

Clause 10. The welding-type system according to clause 8, wherein at least a portion of the operational data is pre-stored into the welding-type power source.

Clause 11. The welding-type system according to clause 8, wherein at least a portion of the operational data is input into the welding-type power source by a user of the welding-type system.

Clause 12. The welding-type system according to clause 8, wherein the welding-type power source is configured to obtain or determine operational data for a plurality of different welding-type wire feeders.

Clause 13. The welding-type system according to clause 12, wherein the welding-type power source is configured to store at least a portion of operational data for each of the plurality of different welding-type wire feeders.

Clause 14. The welding-type system according to clause 12, wherein the welding-type power source is configured to identify or select the operational data based on identification information provided by the welding-type wire feeder.

Clause 15. The welding-type system according to clause 1, wherein the welding-type wire feeder comprises a capacitor component, and wherein the welding-type power source is configured to obtain the initial event data in response to flow of a charging current from the capacitor component in the feeder power circuit during the initial attachment event.

Clause 16. The welding-type system according to clause 1, wherein the one or more welding-type cables comprise a feeder welding-type cable connecting the welding-type wire feeder to a component or object other than the welding-type power source.

Clause 17. The welding-type system according to clause 16, wherein the welding-type power source is configured to generate the initial estimate based on cable-related data associated with the feeder welding-type cable.

Clause 18. The welding-type system according to clause 17, wherein the cable-related data comprises resistance of the feeder welding-type cable.

**Claims**

1. A welding-type system, comprising:

a welding-type power source configured to provide power to one or more components of the welding-type system; and
a welding-type wire feeder configured to feed electrode wire during welding-type operations;
wherein the welding-type power source and the welding-type wire feeder form a feeder power circuit, the feeder power circuit further comprising one or more welding-type cables; and
wherein the welding-type power source is configured to:

obtain initial event data relating to an initial attachment event,

wherein the initial attachment event comprises closing the feeder power circuit in a powered-up state, or powering on the welding-type system when the feeder power circuit is already closed, and
wherein the initial event data comprises duration and one or both of voltage and current of the initial attachment event; and

generate, based on the initial event data, an initial estimate for Cable Length Compensation (CLC) in a weld circuit that comprises the welding-type power source and the welding-type wire feeder.

2. The welding-type system according to claim 1, wherein the feeder power circuit further comprises a workpiece.

3. The welding-type system according to claim 2, wherein the feeder power circuit comprises at least a first welding-type cable connecting the welding-type power source to the workpiece, a second welding-type cable connecting the welding-type power source to the welding-type wire feeder, and a third welding-type cable connecting the welding-type wire feeder to the workpiece.

4. The welding-type system according to claim 3, wherein the initial attachment event comprises or is based on the connecting of the welding-type wire feeder to the workpiece the using the third welding-type cable.

5. The welding-type system according to claim 3, wherein the third welding-type cable comprises a clamping component configured for clamping onto the workpiece.

6. The welding-type system according to claim 2, wherein the feeder power circuit further comprises a switching component configured for closing the feeder power circuit.

7. The welding-type system according to claim 6, wherein the switching component comprises a clamping component associated with one of the one or more welding-type cables, wherein the clamping component is configured for clamping onto the workpiece.

8. The welding-type system according to claim 1, wherein the welding-type power source is configured to generate the initial estimate based on the initial event data using operational data associated with the welding-type wire feeder.

9. The welding-type system according to claim 8, wherein the operational data comprises capacitance of the welding-type wire feeder.

10. The welding-type system according to claim 8, wherein at least a portion of the operational data is pre-stored into the welding-type power source.

11. The welding-type system according to claim 8, wherein at least a portion of the operational data is input into the welding-type power source by a user of the welding-type system, or
wherein the welding-type power source is configured to obtain or determine operational data for a plurality of different welding-type wire feeders.

12. The welding-type system according to claim 11, wherein the welding-type power source is configured to store at least a portion of operational data for each of the plurality of different welding-type wire feeders or
wherein the welding-type power source is configured to identify or select the operational data based on identification information provided by the welding-type wire feeder.

13. The welding-type system according to claim 1, wherein the welding-type wire feeder comprises a capacitor component, and wherein the welding-type power source is configured to obtain the initial event data in response to flow of a charging current from the capacitor component in the feeder power circuit during the initial attachment event, or
wherein the one or more welding-type cables comprise a feeder welding-type cable connecting the welding-type wire feeder to a component or object other than the welding-type power source.

14. The welding-type system according to claim 13, wherein the welding-type power source is configured to generate the initial estimate based on cable-related data associated with the feeder welding-type cable.

15. The welding-type system according to claim 14, wherein the cable-related data comprises resistance of the feeder welding-type cable.

**FIG. 1**

Power Source
210

Gas Cylinder
240

Source-Feeder
Cable
222

Source-
workpiece
Cable
232

Wire
Feeder
220

Gas Hose
242

Torch Cable
252

Feeder-workpiece
234

Workpiece
230

Torch (gun)
250

200

FIG. 2

EP 4 659 887 A1

FIG. 3

FIG. 4

**Fig. 5**

500

FIG. 6

600

Europäisches
Patentamt

European
Patent Office

Office européen
des brevets

# EUROPEAN SEARCH REPORT

**Application Number**

EP 25 17 7985

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 353 390 A1 (ILLINOIS TOOL WORKS [US]) 17 April 2024 (2024-04-17) * figure 2 * * page 70 * ----- | 1-15 | INV. B23K9/095 B23K9/12 |

| | |
|---|---|
| | **TECHNICAL FIELDS SEARCHED (IPC)** |
| | B23K |

The present search report has been drawn up for all claims

| Place of search | Date of completion of the search | Examiner |
|---|---|---|
| Munich | 30 October 2025 | Perret, William |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 7985

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2025

| Patent document cited in search report | | Publication date | Patent family member(s) | | Publication date |
|---|---|---|---|---|---|
| EP 4353390 | A1 | 17-04-2024 | CA | 3213201 A1 | 23-03-2024 |
| | | | EP | 4353390 A1 | 17-04-2024 |
| | | | US | 2024100618 A1 | 28-03-2024 |

EPO FORM P0459

For more details about this annex : see Official Journal of the European Patent Office, No. 12/82

**EP 4 659 887 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63653606